# EUROPÄISCHE PATENTSCHRIFT

(11) **EP 0 349 978 B1**
(45) Veröffentlichungstag und Bekanntmachung des Hinweises auf die Patenterteilung: **15.12.1993**
(21) Anmeldenummer: 89112196.4
(22) Anmeldetag: 04.07.1989
(51) Int. Cl.: F16F 7/10, F16F 3/06, F16L 3/20

(54) **Anordnung zum Dämpfen von Schwingungen elastischer Systeme**
Arrangement for damping oscillations in elastic systems
Disposition d'amortissement des oscillations de systèmes élastiques

(30) Priorität: 08.07.1988 DE 3823207
(43) Veröffentlichungstag der Anmeldung: 10.01.1990
(73) Patentinhaber: Ringfeder GmbH, 47829 Krefeld (DE)
(72) Erfinder: Wahle, Michael, Dr.-Ing., D-5130 Geilenkirchen (DE)

(56) Entgegenhaltungen:
- BE-A- 405 526
- DE-C- 864 178
- DE-C- 1 455 252
- DE-C- 3 713 620
- GB-A- 166 516
- GB-A- 315 941
- US-A- 2 519 702
- PATENT ABSTRACTS OF JAPAN, Band 6, Nr. 242 (M-175)[1120], 30. November 1982;& JP-A-57 140 942 (TOKYO SHIBAURA DENKI K.K.) 31-08-1982
- IDEM
- G. Niemann, "Maschinenelemente", Band 1, 2. Auflage 1975, Seite 234

## Beschreibung

Der Erfindung betrifft eine Anordnung gemäß Oberbegriff des Auspruchs 1.

Elastische Systeme mit geringer Eigendämpfung - wie Antriebseinheiten, Rohrleitungen, Seile - werden beispielsweise durch Unwuchten, Kräfte aus Strömungen oder Seismik zu Schwingungen angeregt, die mit Hilfe dynamischer Schwingungsdämpfer zu beruhigen sind.

Dem Fachmann sind dynamische Schwingungsdämpfer allgemein bekannt, die aus einer Dämpfermasse, axial belastbaren Schraubenfedern und parallel zu diesen angeordneten hydraulischen Dämpfungselementen bestehen, wobei die Schrauben federn und die Dämpfungselemente mit dem elastischen System und der Dämpfermasse verbunden sind. Bei solchen dynamischen Schwingungsdämpfern liegt ein Problem darin, daß die hydraulischen Dämpfungselemente nichtlineare Eigenschaften aufweisen, zusätzliche Federkräfte entwickeln und bei kleinen Wegen oder kleinen Schwinggeschwindigkeiten nicht wirkungsvoll arbeiten.

Zum Stand der Technik gehören weiter dynamische Schwingungsdämpfer mit Gummielementen oder solche mit quer belastbaren Drahtseil-Schraubenfedern (DE-C-28 06 757), die jeweils sowohl federnde als auch dämpfende Wirkung haben. Als ein Nachteil dieser Schwingungsdämpfer wird angesehen, daß die maßgebenden Kennlinien nur mit einem erheblichen theoretischen Aufwand vorausberechnet werden können, so daß der praxisgerechte Einsatz, der eine entsprechende Dämpferauslegung erfordert, ohne versuchstechnischen Nachweis mit Unsicherheit behaftet ist. Außerdem ungünstig weisen Gummielemente ein frequenz- und temperaturabhängiges Verhalten auf.

Der Erfindung liegt die Aufgabe zugrunde, eine Anordnung der gattungsgemäßen Art, wie sie aus der DE-C-2 806 757 bekannt ist, so zu verbessern, daß die vorstehend genannten Nachteile beseitigt sind.

Diese Aufgabe wird erfindungsgemäß dadurch gelöst, daß als federndes und dämpfendes Element eine aus Außenringen und Innenringen gebildete Reibungsfeder vorgesehen ist, deren Ringe jeweils über konische Berührungsflächen zusammenwirken.

Durch beispielsweise die Dokumente GB-A-166 516, DE-C-1 455 252 und GB-A-315 941 sind aus Außenringen und Innenringen gebildete Reibungsfeder-Elemente bekannt, wobei diese Ringe über konische Berührungsflächen zusammenwirken. Solche Reibungsfeder-Elemente werden vor allem bei Zug- und Stoßvorrichtungen sowie Hülsenpuffern von Schienenfahrzeugen verwendet. Als federnde und schwingungsdämpfende Elemente eines dynamischen Schwingungsdämpfers sind Reibungsfeder-Elemente allerdings bisher nicht vorgesehen worden.

Der Erfindungsgegenstand weist gegenüber bekannten Ausführungen vor allem folgende Vorteile auf:
- Durch die spezifischen nichtlinearen Eigenschaften des Reibungsfeder-Elements ist eine wesentlich größere Fehlertoleranz bei der Abstimmung des Systems als bei linearen beziehungsweise fast linearen Schwingungsdämpfern gegeben, d.h., Abweichungen von erwarteten Eigenfrequenzen und reduzierten Massen beziehungsweise Veränderungen von Eigenfrequenzen und reduzierten Massen durch betriebliche Bedingungen (beispielsweise Temperaturveränderungen, variable Massenbelegung) wirken sich in erheblich geringerem Maße dämpfungsmindernd aus als bei linearen Schwingungsdämpfern. Die spezifisch nichtlinearen Eigenschaften führen auch dazu, daß bei Systemen mit mehreren Eigenfrequenzen Schwingungen außerhalb der Abstimmungsfrequenz des Dämpfers wirksamer gedämpft werden als bei Linearen bzw. fast Linearen Schwingungsdämpfern.
- Das Systemverhalten ist durch diebereichsweise linearen Kennlinien des Reibungsfeder-Elements klar definiert und durch Einsatz axial geschlitzter und/oder geschlossener Ringe der Reibungsfeder sowie durch die Anzahl der Ringe festgelegt, so daß eine eindeutige Berechenbarkeit gegeben ist.
- Die Kennlinien sind unabhängig vom Schwingweg, von der Schwinggeschwindigkeit und von der Temperatur, bei sehr gutem Dauerschwingverhalten des Reibungsfeder-Elements.

Um im Sinne einer Optimierung der Schwingungsdämpfung spezifische Eigenschaften des Hauptsystems gezielt berücksichtigen zu können, ist nach einer Ausgestaltung der Erfindung vorgesehen, da] parallel und/oder in Reihe zu dem Reibungsfeder-Element andere federnde und/oder dämpfende Bauteile angeordnet sind.

Gemäß einer nächsten Ausgestaltung der Erfindung steht das Reibungsfeder-Element unter Vorspannung. Dadurch wird die in einigen Anwendungsfällen bestehende Forderung erfüllt, dem Hauptsystem unterhalb einer der Vorspannung entsprechenden Grenzbeschleunigung beziehungsweise Grenzverformung keine Zusatzdämpfung zuzuführen und/oder keine Frequenzverstimmung durch die elastischen Eigenschaften des Schwingungsdämpfers zu bewirken. Wegen der Vorspannung des Reibungsfeder-Elements kann weiter günstig bei der Identifikation eines Hauptsystems, das unterhalb der Grenzbeschleunigung nur massenmäßig beeinflußt wird, auch bei eingebautem Schwingungsdämpfer auf eine Blockierung des Elements verzichtet werden, wenn die Grenzbeschleunigung nicht überschritten wird.

Eine ergänzende Ausbildung der Erfindung liegt darin, daß die Vorspannung des Reibungsfeder-Elements mittels geeigneter Hilfseinrichtungen variabel einstellbar ist. Falls die Vorspannung für einen bestimmten Anwendungsfall, also einmalig oder selten einzustellen ist, empfiehlt sich als Hilfsmittel dazu eine einfache Schraubenanordnung. Es ist auch durchaus möglich, die Vorspannung während des Erregungsvorganges permanent einem jeweils gewünschten Dämpfungsverhalten anzupassen. Dafür kommen als Hilfsmittel aktive Regelungen in Betracht, wie Meßwertgeber, Mikroprozessor und Hydraulik.

Nach weiteren Ausführungsformen der Erfindung ist vorgesehen, daß das Reibungsfeder-Element in Zug- und Druckrichtung eine symmetrische Kennlinie oder eine asymmetrische Kennlinie aufweist, durch die es im letzteren Fall in Zugrichtung anders arbeitet als in Druckrichtung. Bei der im Grenzfall der Asymmetrie nur einseitigen Kennlinie werden zwischen dem Hauptsystem und der Dämpfermasse stoßförmige Kräfte hervorgerufen, durch die das Schwingungsverhalten in speziellen Anwendungsfällen günstig beeinflußbar ist.

Eine bauliche Vereinfachung ist gemäß einer nächsten Ausgestaltung der Erfindung dadurch erzielbar, daß ein zum Reibungsfeder-Element gehörendes Gehäuse zumindest einen Teil der Dämpfermasse bildet.

Um Geräusche und Verschleiß so gering wie möglich zu halten, ist nach einer weiteren Ausführungsform der Erfindung vorgesehen, daß das Reibungsfeder-Element zum Verhindern metallischer Anschläge scheibenförmige elastische Schichten aufweist.

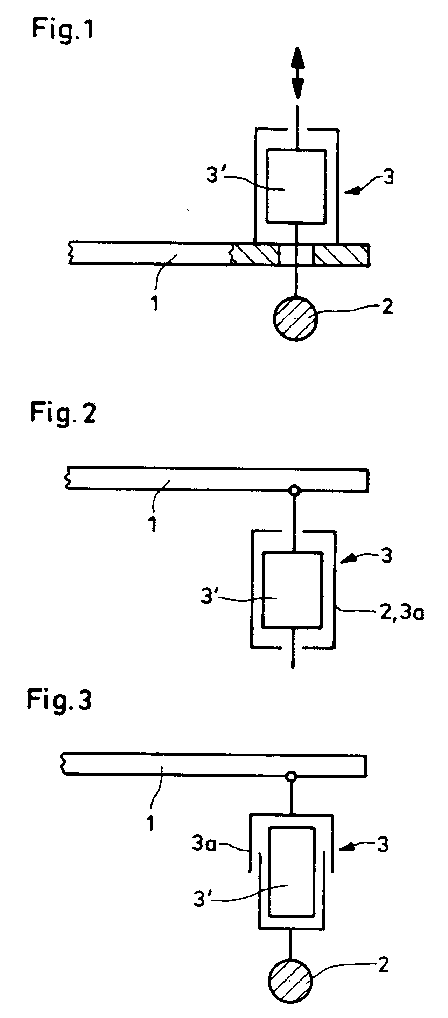

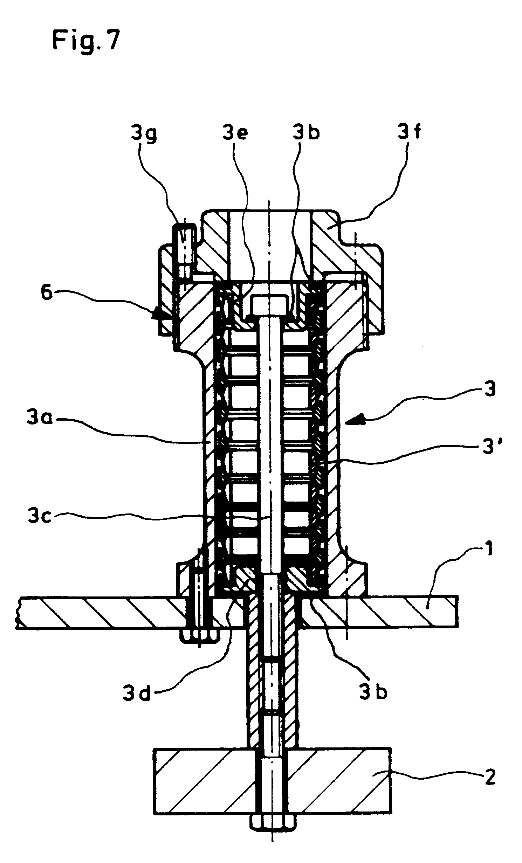

Ausführungsbeispiele der Erfindung sind in der Zeichnung schematisch dargestellt und werden im folgenden näher beschrieben. Die Fig. 1 bis 6 zeigen jeweils das Prinzip von Anordnungen zum Dämpfen von Schwingungen. In Fig. 7 ist die Anordnung nach Fig. 1 im größeren Maßstab und im Schnitt gezeigt. Fig. 8 zeigt die Kennlinie zu Fig. 1 und 7.

In allen Beispielen ist ein elastisches System (Hauptsystem) mit 1, eine Dämpfermasse (Zusatzsystem) mit 2 und ein sowohl federndes als auch dämpfendes Element mit 3 bezeichnet, wobei es sich im wesentlichen um eine ringförmige Reibungsfeder 3' handelt.

Gemäß Fig. 1 und 7 ist die von einem Gehäuse 3a umgebene Reibungsfeder 3' auf einer Seite des elastischen Systems 1 angeordnet und über eine Zug- und Druckstange 3c mit der auf der anderen Seite des elastischen Systems 1 befindlichen Dämpfermasse 2 verbunden. Wie aus Fig. 7 näher ersichtlich, besteht das Reibungsfeder-Element 3' aus Außenringen und geschlitzten Innenringen, die jeweils über konische Berührungsflächen zusammenwirken. Zum Anlenken dieses Reibungsfeder-Elements 3' an die Zug- und Druckstange 3c sind Stützplatten 3d und 3e vorgesehen, von denen die in Zeichnungsebene untere (3d) gegen das elastische System 1 und die obere (3e) gegen ein Bodenstück 3f des Gehäuses 3a anliegt. Im Bereich der beiden vorgenannten Anlageflächen sowie zwischen dem Kopf der Zug- und Druckstange 3c und der oberen Stützplatte 3e befinden sich scheibenförmige elastische Schichten 3b, die metallische Anschläge verhindern. Bodenstück 3f und Gehäuse 3a sind durch ein Gewinde miteinander verbunden, das auch als Hilfseinrichtung 6 zum Einstellen der Vorspannung für das Reibungsfeder-Element 3' dient. Eine Schraube 3g sichert das Bodenstück 3f gegenüber einem ungewollten Verdrehen.

Das in Fig. 8 gezeigte Kraft F - Weg x - Diagramm zu der Anordnung nach Fig. 1 und 7 ist bezüglich des Zug- und des Druckbereiches symmetrisch. Die Belastungslinien B und die Entlastungslinien E sind jeweils linear; beide Linien zusammen ergeben die spezifisch nichtlineare Kennlinie des Reibungsfeder-Elements 3'.

Unterschiedlich zu Fig. 1 ist gemäß Fig. 2 das federnde und dämpfende Element 3 am elastischen System 1 aufgehängt, wobei das Gehäuse 3a zugleich die Dämpfermasse 2 bildet. Bei der in Fig. 3 dargestellten Aufhängung des federnden und dämpfenden Elements 3 besteht das Gehäuse 3a aus zwei teleskopartig zueinander geführten Gehäuseteilen. Die Dämpfermasse 2 ist auch in diesem Fall in Zug- und in Druckrichtung mit dem Reibungsfeder-Element 3' verbunden.

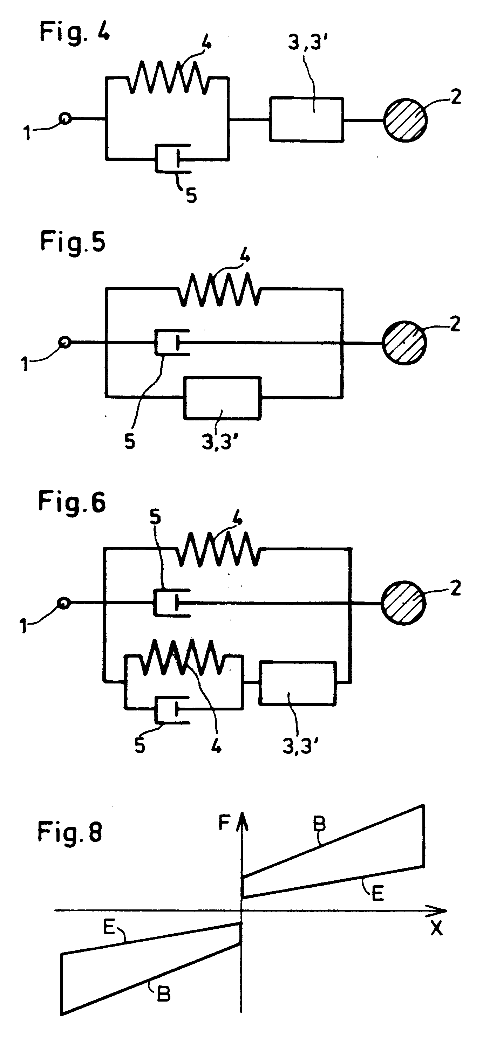

Je nach Anwendungsfall können in Kombination mit dem Reibungsfeder-Element 3' weitere solche Elemente 3', aber auch andere federnde Bauteile 4 und dämpfende Bauteile 5 vorgesehen werden. Gemäß Fig. 4 ist jeweils in Reihe zu dem Reibungsfeder-Element 3' ein anderes federndes Bauteil 4 und ein anderes dämpfendes Bauteil 5 angeordnet. Im Beispiel nach Fig. 5 arbeiten ein anderes federndes Bauteil 4 und ein anderes dämpfendes Bauteil 5 jeweils parallel zum Reibungsfeder-Element 3'. Gegenüber Fig. 5 ist nach Fig. 6 ein zusätzliches federndes Bauteil 4 und ein zusätzliches dämpfendes Bauteil 5 zu dem Reibungsfeder-Element 3' angeordnet. Die Darstellungen nach Fig. 4 bis 6 weisen im übrigen den Weg zu weiteren, nicht dargestellten Kombinationsmöglichkeiten, beispielsweise einer Reihen- oder Parallelanordnung von Reibungsfeder-Element 3' und nur einem anderen, entweder federnden oder dämpfenden Element 4 bzw. 5.

Bei der Dämpfermasse 2 kann es sich um einen starren Körper oder um einen elastischen Körper handeln, der selbst im interessierenden Frequenzbereich relevante Eigenbewegungen ausführt.

## Patentansprüche

1. Anordnung zum Dämpfen von Schwingungen elastischer Systeme (1) die im wesentlichen aus einer Vorrichtung mit einer als Dämpfermasse (2) wirkenden Zusatzmasse und mit zumindest einem federnden sowie dämpfenden Element (3) und aus dem elastischen System (1) besteht, wobei das Element (3) mit dem elastischen System (1) und der Dämpfermasse (2) verbunden ist, dadurch gekennzeichnet, daß als federndes und dämpfendes Element (3) eine aus Außenringen und Innenringen gebildete Reibungsfeder (3') vorgesehen ist, deren Ringe jeweils über konische Berührungsflächen zusammenwirken.

2. Anordnung nach Anspruch 1, dadurch gekennzeichnet, daß parallel und/oder in Reihe zu dem Reibungsfeder-Element (3') andere federnde und/oder dämpfende Bauteile (4, 5) angeordnet sind.

3. Anordnung nach Anspruch 1 oder 2, dadurch gekennzeichnet, daß das Reibungsfeder-Element (3') unter Vorspannung steht.

4. Anordnung nach Anspruch 3, dadurch gekennzeichnet, daß die Vorspannung des Reibungsfeder-Elements (3') mittels geeigneter Hilfseinrichtungen (6) variabel einstellbar ist.

5. Anordnung nach einem der Ansprüche 1 bis 4, dadurch gekennzeichnet, daß das Reibungsfeder-Element (3') in Zug- und Druckrichtung eine symmetrische Kennlinie aufweist.

6. Anordnung nach einem der Ansprüche 1 bis 4, dadurch gekennzeichnet, daß das Reibungsfeder-Element (3') eine asymmetrische Kennlinie aufweist, durch die es in Zugrichtung anders arbeitet als in Druckrichtung.

7. Anordnung nach einem der Ansprüche 1 bis 6, dadurch gekennzeichnet, daß ein zum Reibungsfeder-Element (3') gehörendes Gehäuse (3a) zumindest einen Teil der Dämpfermasse (2) bildet.

8. Anordnung nach einem der Ansprüche 1 bis 7, dadurch gekennzeichnet, daß das Reibungsfeder-Element (3') zum Verhindern metallischer Anschläge scheibenförmige elastische Schichten (3b) aufweist.

## Claims

1. An arrangement for damping oscillations in resilient systems (1), essentially consisting of a device - having an additional body effective as a damping body (2) and at least one resilient damping member (3) - and the resilient system (1), the member (3) being connected to the resilient system (1) and to the damping body (2), **characterised in that** a friction spring (3') formed from external and internal rings is provided as the resilient damping member (3), and the rings thereof each co-operate over conical contact surfaces.

2. An arrangement in accordance with claim 1, **characterised in that** other resilient and/or damping components (4, 5) are arranged in parallel and/or in series with the friction spring member (3').

3. An arrangement in accordance with claim 1 or 2, **characterised in that** the friction spring member (3') is pre-stressed.

4. An arrangement in accordance with claim 3, **characterised in that** the pre-stressing of the friction spring member (3') is variably adjustable by means of suitable additional devices (6).

5. An arrangement in accordance with one of claims 1 to 4, **characterised in that** the friction spring member (3') has a symmetrical characteristic in the tension and compression directions.

6. An arrangement in accordance with one of claims 1 to 4, **characterised in that** the friction spring member (3') has an asymmetrical characteristic, whereby it operates differently in the tension direction and in the compression direction.

7. An arrangement in accordance with one of claims 1 to 6, **characterised in that** a casing (3a), associated with the friction spring member (3'), forms at least one part of the damping body (2).

8. An arrangement in accordance with one of claims 1 to 7, **characterised in that** the friction spring member (3') has disc-shaped resilient layers (3b) to prevent impact between metal surfaces.

## Revendications

1. Dispositif pour amortir des oscillations de systèmes élastiques (1), se composant, pour l'essentiel du système élastique (1) et d'un agencement comprenant une masse additionnelle agissant comme une masse d'amortissement (2), et au moins un élément (3) à la fois élastique et amortisseur, l'élément (3) étant relié au système élastique (1) et à la masse d'amortissement (2), caractérisé par le fait qu'un ressort de friction (3'), constitué de bagues extérieures et de bagues intérieures, est prévu en tant qu'élément (3) élastique et amortisseur, ressort dont les bagues coopèrent respectivement par l'intermédiaire de surfaces coniques de contact

2. Dispositif selon la revendication 1, caractérisé par le fait que d'autres pièces structurelles (4, 5), élastiques et/ou amortissantes, sont agencées parallèlement et/ou en série par rapport à l'élément (3') à ressort de friction.

3. Dispositif selon la revendication 1 ou 2, caractérisé par le fait que l'élément (3') à ressort de friction est soumis à une précharge.

4. Dispositif selon la revendication 3, caractérisé par le fait que la précharge de l'élément (3') à ressort de friction peut être réglée, de manière variable, au moyen de dispositifs auxiliaires appropriés (6).

5. Dispositif selon l'une des revendications 1 à 4, caractérisé par le fait que l'élément (3') à ressort de friction présente une courbe caractéristique symétrique dans les directions de traction et de pression.

6. Dispositif selon l'une des revendications 1 à 4, caractérisé par le fait que l'élément (3') à ressort de friction présente une courbe caractéristique asymétrique impliquant qu'il agisse, dans la direction de la traction, d'une autre manière que dans la direction de la pression.

7. Dispositif selon l'une des revendications 1 à 6, caractérisé par le fait qu'un boîtier (3a), solidaire de l'élément (3') à ressort de friction, forme au moins une partie de la masse d'amortissement (2).

8. Dispositif selon l'une des revendications 1 à 7, caractérisé par le fait que l'élément (3') à ressort de friction présente des couches discoïdales élastiques (3b) en vue d'empêcher des impacts métalliques.
